# EUROPÄISCHE PATENTSCHRIFT

(11) **EP 2 549 317 B1**
(45) Veröffentlichungstag und Bekanntmachung des Hinweises auf die Patenterteilung: **01.04.2015**
(21) Anmeldenummer: 12003969.8
(22) Anmeldetag: 22.05.2012
(51) Int. Cl.: G02B 6/44, G08B 13/14, G08B 29/02, G08B 13/186

(54) **Überwachungssystem für Glasfaser-Netzverteiler**
Monitoring system for glass fibre network distributor
Système de surveillance pour distributeur réseau en fibre de verre

(30) Priorität: 22.07.2011 DE 102011108371
(43) Veröffentlichungstag der Anmeldung: 23.01.2013
(73) Patentinhaber: Langmatz GmbH, 82467 Garmisch-Partenkirchen (DE); ADVANCED OPTICS SOLUTIONS GMBH, 01067 Dresden (DE)
(72) Erfinder: Bauer, Hubert, 82467 Garmisch-Partenkirchen (DE); Resch, Hans-Jörg, 82491 Grainau (DE); Wulf, Stephan, 82467 Garmisch-Partenkirchen (DE)
(74) Vertreter: Flosdorff, Jürgen

(56) Entgegenhaltungen:
- EP-A1- 1 072 912
- WO-A1-2010/095015
- JP-A- 2001 159 583
- US-A- 4 556 280
- US-A- 4 577 184
- US-A- 4 705 348
- US-A- 4 898 445
- US-A1- 2006 071 770
- US-A1- 2009 040 046

## Beschreibung

Die Erfindung betrifft ein Überwachungssystem für den Schließzustand der Tür oder des Deckels eines Gehäuses eines Glasfaser-Netzverteilers.

Bei dem Glasfaser-Netzverteiler kann es sich um einen Schrank handeln, der oberirdisch aufgestellt und mit einer Tür versehen ist, oder um einen unterirdischen Schacht, der über einen Schachtdeckel zugänglich ist. In dem Glasfaser-Netzverteiler befinden sich nur Glasfaser-Kabel, die in dem Netzverteiler gespleißt und dann den einzelnen Verbrauchern, d.h. Gebäuden, zugeführt werden. In den Glasfaser-Netzverteilern werden typischerweise keine Kupferkabel geführt, durch die Strom zuführbar ist. Von einer Zentralstelle werden Glasfaserkabel in den Netzverteiler geführt, dort aufgeteilt und z.B. über Micropipes zu einzelnen Gebäuden geführt. Diese Glasfaserkabel dienen der Übertragung von Telekommunikationssignalen.

Es ist wichtig, bei derartigen Glasfaser-Netzverteilern ständig überprüfen zu können, ob deren Tür oder Schachtdeckel ordnungsgemäß geschlossen ist oder von Unbefugten geöffnet wurde, beispielsweise durch Vandalismus. In diesem Fall muss unverzüglich ein Alarm des Netzverteilers an eine zentrale Überwachung abgesetzt werden.

Ein Überwachungssystem mit den Merkmalen des Oberbegriffs des Anspruchs 1 offenbart die US 2006/071 770 A1.

Der vorliegenden Erfindung liegt die Aufgabe zugrunde, ein Überwachungssystem für den Schließzustand der Tür oder des Deckels eines Gehäuses oder Schachtes eines Glasfaser-Netzverteilers anzugeben, ohne dass hierzu (der nicht zu Verfügung stehende) Strom als Energiequelle herangezogen wird.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht vor, dass eine von dem Gehäuse des Glasfaser-Netzverteilers räumlich getrennte, entfernte Steuer-, Mess- und Überwachungseinheit über einen nicht für die Telekommunikation genutzten Glasfaserleiter bzw. -kabel mit einer Dämpfungseinrichtung verbunden ist, die in dem Gehäuse des Glasfaser-Netzverteilers bzw. in dem Schacht untergebracht ist. Die Erfindung macht davon Gebrauch, dass die Dämpfungseinrichtung durch den Glasfaser-Leiter ausgesandte Lichtimpulse in veränderter bzw. gedämpfter Form zu der zentralen Steuer-, Mess- und Überwachungseinheit zurück schickt, wenn die Dämpfungseinrichtung durch eine Betätigungseinrichtung in einen wirksamen Zustand versetzt wird, wenn die Tür oder der Deckel des Glasfaser-Netzverteilers geöffnet wird.

Die zentrale Steuer-, Mess- und Überwachungseinheit hat Mittel zum Aussenden von Lichtimpulsen durch den für das Überwachungssystem angeordneten Glasfaser-Leiter und zum Empfangen der zurück kehrenden Lichtimpulse und zu deren Auswertung, wozu die Steuer-, Mess- und Überwachungseinheit mit einem Computer versehen ist.

Bei dem erfindungsgemäßen Überwachungssystem hat die Dämpfungseinrichtung ein Gehäuse, in dem ein feststehendes Steckerteil und ein axial bewegliches Steckerteil angeordnet sind. Der für die Überwachung vorgesehene Glasfaserleiter ist im feststehenden Steckerteil so befestigt, dass seine vordere Stirnfläche zu dem beweglichen Steckerteil hin frei liegt. Das bewegliche Steckerteil hat eine verspiegelte Stirnfläche, die der Stirnfläche des Glasfaser-Leiters gegenüber liegt. Das bewegliche Steckerteil ist zwischen einer Position, in der es mit seiner verspiegelten Fläche an dem Glasfaser-Leiter anliegt, und einer davon beabstandeten Position bewegbar, wodurch ein optischer Übergang geschaffen ist, der geschlossen oder durch einen Spalt offen sein kann. Wenn der Spalt offen ist, hat dies eine messbare Dämpfung zur Folge.

Erfindungsgemäß ist vorgesehen, dass das bewegliche Steckerteil durch die Kraft zweier gegenpoliger Magnete entgegen der Kraft einer Feder an das feststehende Steckerteil andrückbar ist. Bei dieser Ausführungsform ist einer der Magnete an der Tür bzw. dem Deckel des Glasfaser-Netzverteilers angebracht, während der andere Magnet an dem beweglichen Steckerteil befestigt ist.

Die beiden Magnete bilden die Betätigungseinrichtung für die Dämpfungseinrichtung, indem das Gehäuse der Dämpfungseinrichtung an einer solchen Stelle in dem Glasfaser-Netzverteiler - beispielsweise an dessen Türrahmen - befestigt ist, dass sich die beiden Magnete bei geschlossener Tür bzw. Deckel so nahe beieinander befinden, dass das bewegliche Steckerteil an das feste Steckerteil angedrückt wird. Wenn die Tür bzw. der Deckel geöffnet wird, sind die Magnete so weit beabstandet, dass das bewegliche Steckerteil von der dieses beaufschlagenden Feder zurück gedrückt wird, so dass sich an dem optischen Übergang der oben erwähnte Spalt bildet. Der Bewegungsbereich des beweglichen Steckerteils liegt dabei in der Größenordnung von etwa 1 mm. Das bewegliche Steckerteil ist in seinem Gehäuse verdrehsicher geführt.

Bevorzugt ist vorgesehen, dass der Endabschnitt des Glasfaser-Leiters in einen stiftartigen Vorsprung des feststehenden Steckerteils eingeklebt ist, und dass auch das bewegliche Steckerteil mit einem entsprechenden stiftartigen Vorsprung versehen ist, wobei die beiden stiftartigen Vorsprünge miteinander fluchten. Die Stirnfläche des stiftartigen Vorsprungs des beweglichen Steckerteils ist verspiegelt.

Mit großem Vorteil ist vorgesehen, dass die Stirnflächen der beiden stiftartigen Vorsprünge in einem übereinstimmenden Winkel von etwa 8° bis etwa 9° abgeschrägt sind. Hierdurch lässt sich eine besonders wirksame, messbare optische Dämpfung erreichen. Wenn die beiden stiftartigen Vorsprünge durch einen Spalt beabstandet sind, d.h. der optische Übergang offen ist, werden die auf die verspiegelte Fläche auftreffenden Lichtimpulse um den genannten Winkel abgelenkt, so dass die hierdurch hervorgerufene optische Dämpfung der zurücklaufenden Lichtimpulse eindeutig erfassbar ist.

Die stiftartigen Vorsprünge bestehen vorzugsweise aus Keramik, während die übrigen Steckerteile vorzugsweise aus Metall bestehen. Das Gehäuse des Steckers kann z.B. aus Polycarbonat bestehen.

Bei einer zweiten, nicht zur Erfindung gehörenden Ausführungsform hat die Dämpfungseinrichtung ein Gehäuse, in dem ein Abschnitt des Glasfaser-Leiters und die Betätigungseinrichtung angeordnet sind, die von der geschlossenen Tür bzw. Deckel des Glasfaser-Netzverteilers in einem unwirksamen Zustand gehalten ist und die bei geöffneter Tür bzw. Deckel durch die Kraft einer Federeinrichtung einen Teil des in dem Gehäuse befindlichen Glasfaser-Leiters in einen gekrümmten oder stärker gekrümmten Zustand versetzt.

Dabei ist bevorzugt vorgesehen, dass die Betätigungseinrichtung ein stabförmiges Element mit einer Ausnehmung ist, in die der Glasfaser-Leiter eingreift, der beidseitig des Stabes an Anschlägen anliegt, wobei der Stab in axialer Richtung bewegbar ist und aus dem Gehäuse heraus ragen kann. Der herausragende Teil wird durch die geschlossene Tür bzw. Deckel gegen die Kraft der Feder in die unwirksame Stellung zurück gedrückt, in der der Stab keine Kraft auf den Glasfaser-Leiter ausübt, der lose in der Ausnehmung liegt. Wenn die Tür bzw. der Deckel geöffnet wird, wird der Stab durch die freigegebene Federkraft aus der Öffnung des Gehäuses heraus gedrückt, wodurch der Glasfaser-Leiter von dem Rand der Aussparung des Stabes ergriffen und - da der Glasfaser-Leiter beidseitig des Stabes an Anschlägen anliegt - dazwischen in einen gekrümmten bzw. stärker gekrümmten Zustand versetzt wird. Der hierdurch gebogene Abschnitt des Glasfaserleiters begrenzt auch die axiale Bewegung des Stabes, der nun mit einem kleinen Kopfabschnitt aus dem Gehäuse heraus ragt. Wenn die Tür bzw. der Deckel geschlossen wird, wird dieser Kopfabschnitt durch die Tür/Deckel in das Gehäuse hineingedrückt, womit der oben beschriebene unwirksame Ausgangszustand der Dämpfungseinrichtung wieder hergestellt ist.

In einer bevorzugten Ausführungsform bildet der Abschnitt des Glasfaser-Leiters in dem Gehäuse eine geschlossene Schlaufe, die von den Wänden des Gehäuses und den beiden Anschlägen gehalten ist.

Die zusätzliche Krümmung des Glasfaserleiters ruft eine messbare Dämpfung der rücklaufenden Lichtimpulse hervor, so dass die zentrale Steuer-, Mess- und Überwachungseinrichtung den offenen Zustand der Tür/des Deckels erfasst. In diesem Fall kann die zentrale Überwachungseinheit ein Alarmsignal erzeugen, so dass umgehend eine Überprüfung des Glasfaser-Netzverteilers möglich ist.

Eine geöffnete Tür bzw. Deckel bedeutet allerdirigs nicht unbediingt, dass das Gehäuse von einem Unbefugten geöffnet worden ist. Ein Monteur, der Arbeiten in dem Glasfaser-Netzverteiler auszuführen hat, kann dies grundsätzlich der Zentrale z.B. durch ein Mobiltelefon mitteilen, um einen Fehlalarm zu vermeiden. Da eine solche Vorgehensweise jedoch nicht immer zuverlässig funktioniert, kann vorgesehen sein, dass ein dem Monteur zugeordneter optischer Schlüssel mit dem Glasfaser-Leiter verbindbar ist, der Mittel aufweist, um zugehörige Lichtimpulse durch den Glasfaser-Leiter zu der Steuer-, Mess- und Überwachungseinheit zu schicken, die auf diese Weise die Berechtigung zum Öffnen der Tür oder des Deckels überprüft. Erst dann, wenn die Zentrale in diesem Fall die den geöffneten Zustand der Tür bzw. des Deckels anzeigenden Lichtimpulse ohne zugehörige Lichtimpulse des optischen Schlüssels eines Monteurs empfängt, steht dann für die Zentrale fest, dass ein umgehend zu behebender Schadensfall eingetreten ist. In diesem Fall gibt der Computer ein Alarmsignal ab.

Die Steuer-, Mess- und Überwachungseinheit kann eine größere Anzahl, beispielsweise 40 bis 50 Glasfaser-Kabel und damit Glasfaser-Netzverteiler überwachen. Die Laufzeit der reflektierten Lichtimpulse der Glasfaser-Kabel sind dabei natürlich verschieden, und können damit den jeweiligen Netzverteilern zugeordnet werden.

Außerhalb des Gehäuses der Dämpfungseinrichtung kann für den optischen Schlüssel eine optische Schnittstelle angeordnet sein, so dass der optische Schlüssel seine zugehörigen Lichtimpulse entweder - wie dies bevorzugt ist - über den bis zur Schnittstelle weiter geführten Glasfaser-Leiter oder über einen zusätzlichen Glasfaser-Leiter an die Zentrale senden kann.

Das erfindungsgemäße Überwachungssystem zeigt somit zuverlässig an, wenn die Tür oder der Deckel eines Netzverteilers geöffnet ist, und gibt in der Ausführungsform mit dem optischen Schlüssel auch darüber Auskunft, ob das Öffnen befugt oder unbefugt erfolgte.

Zwei Ausführungsformen der Dämpfungseinrichtung werden nachfolgend mit Bezug auf die Zeichnungen näher beschrieben. Dabei zeigen:
- Figur 1: eine erste Ausführungsform einer Dämpfungseinrichtung mit geschlossenem optischen Übergang;
- Figur 2: die Dämpfungseinrichtung gemäß Figur 1 mit offenem optischen Übergang;
- Figur 3: eine zweite nicht zur Erfindung gehörenden Ausführungsform einer Dämpfungseinrichtung im unwirksamen Zustand bei geschlossener Tür/Deckel und
- Figur 4: die Dämpfungseinrichtung gemäß Figur 3 bei geöffneter Tür/Deckel.

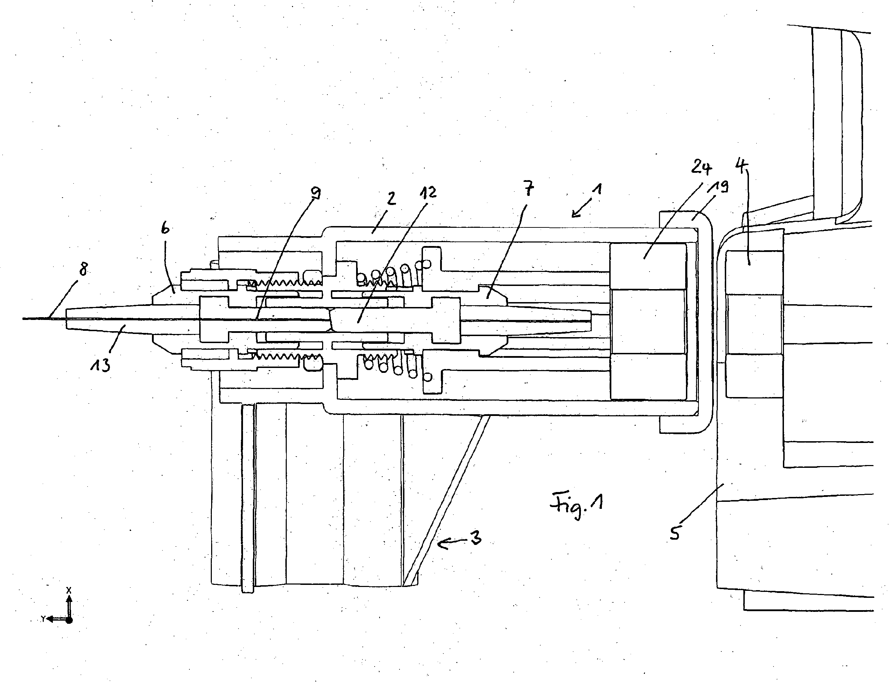

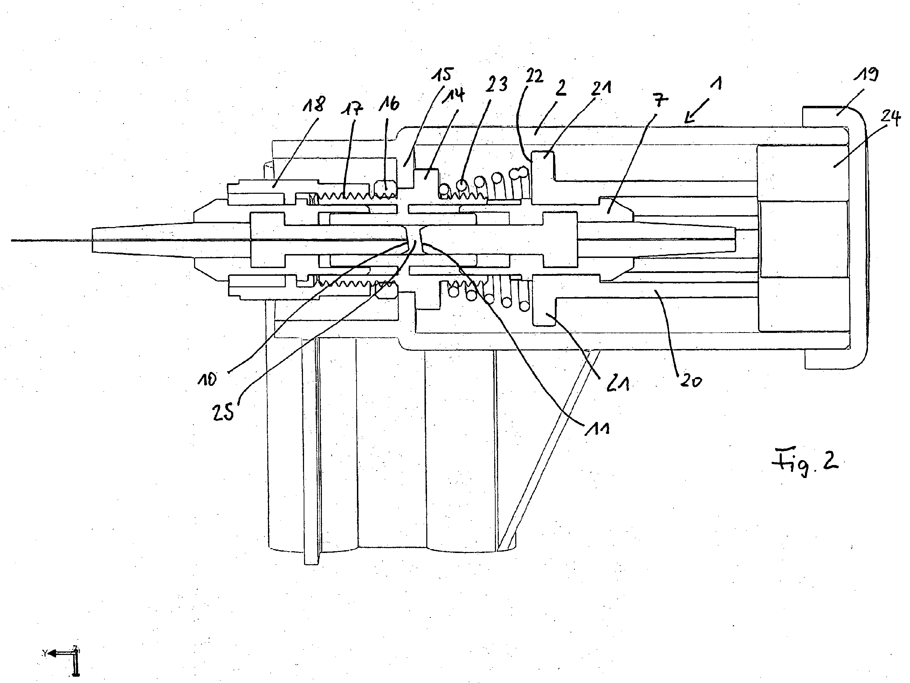

Die in den Figuren 1 und 2 dargestellte Dämpfungseinrichtung 1 enthält ein Gehäuse 2, das bevorzugt aus Polycarbonat hergestellt ist und mittels einer Halterung 3 an einer geeigneten Stelle in einem nicht dargestellten Schrank eines Glasfaser-Netzverteilers so angeordnet ist, dass sich das in den Figuren rechte Ende des Gehäuses nahe bei einem Ringmagneten 4 befindet, der an der Innenseite einer lediglich durch einen Strich 5 angedeuteten Tür des Glasfaser-Netzverteiler-Schranks befestigt ist. Die Anordnung kann auch so getroffen werden, dass die Dämpfungseinrichtung 1 im Inneren eines Schachtes angeordnet ist und sich mit dem rechten Endabschnitt nahe bei einem am Schachtdeckel befestigten Ringmagneten befindet.

In dem Gehäuse 2 befinden sich ein feststehendes Steckerteil 6 und ein bewegliches Steckerteil 7, wobei das letztere in axialer Richtung in Nuten geführt um etwa 1 mm hin und her bewegbar ist. Das bewegliche Steckerteil ist damit nicht-drehbar in dem Gehäuse 2 gehalten.

Ein nicht für die Übertragung von Telekommunikationsdaten genutzter Glasfaser-Leiter 8 verläuft mittig in axialer Richtung durch das feststehende Steckerteil und ist in dem zugehörigen Kanal in einen stiftartigen Vorsprung des feststehenden Steckerteils 6 eingeklebt, wobei die Stirnfläche des Glasfaser-Leiters 8 im wesentlichen bündig mit der Stirnfläche des stiftartigen Vorsprungs 9 abschließt und nach außen frei liegt. Die Stirnfläche des stiftartigen Vorsprungs 9 ist mit dem Bezugzeichen 10 gekennzeichnet und liegt in dem in Figur 1 dargestellten Zustand der Dämpfungseinrichtung an einer Stirnfläche 11 eines stiftartigen Vorsprungs 12 des beweglichen Steckerteils 7 an. Die beiden Stirnflächen 10 und 11 sind in einem übereinstimmenden Winkel von 8° oder 9° abgeschrägt.

Das Bezugszeichen 13 bezeichnet einen biegsamen Knickschutz für den Glasfaser-Leiter 8.

Das feststehende Steckerteil 6 liegt mit einem Bund 14 fest an einer inneren Ringwand 15 des Gehäuses 2 an, indem eine Mutter 16 an der anderen Seite der Ringwand 15 auf einem Außengewinde 17 des feststehenden Steckerteils 6 festgezogen ist. Das Bezugszeichen 18 bezeichnet eine Überwurfmutter, die ebenfalls auf das Außengewinde 17 aufgeschraubt ist.

Der an die Ringwand 15 anschließende, rechte Teil des Innenraums des Gehäuses 2 ist durch einen Abschlussdeckel 19 dicht verschlossen. Das bewegliche Steckerteil 7 ist mit einer Übertragungshülse 20 fest verbunden, die mit radialen Vorsprüngen 21 in Längsnuten der inneren Gehäusewand axial geführt ist. Zwischen dem Bund 14 des feststehenden Steckerteils 6 und der diesem zugewandten ringförmigen Stirnwand 22 der Übertragungshülse 20 ist eine Schraubenfeder 23 angeordnet, die das bewegliche Steckerteil 7 in der Darstellung der Figuren nach rechts beaufschlagt.

An dem von dem feststehenden Steckerteil 6 abgewandten Endabschnitt der Übertragungshülse 20 ist ein Magnet 24 befestigt, der bei geschlossener Tür dem Magneten 4 gegenüber liegt und gegenpolig zu diesem ausgerichtet ist.

In dem in Figur 1 dargestellten Zustand der Dämpfungseinrichtung 1, in dem die Tür des Netzverteilerschranks geschlossen ist, wird das bewegliche Steckerteil 7 durch die einander abstoßende Magnetkraft der beiden nah beieinander befindlichen Magnete 24, 4 der bewegliche Stecker 7 nach links bewegt und mit der Stirnfläche 11 seines stiftartigen Vorsprungs 12 an die Stirnfläche 10 des gegenüberliegenden stiftartigen Vorsprungs 9 angedrückt. Die Stirnfläche 11 ist verspiegelt. Sie liegt dem Ende des Glasfaser-Leiters 8 gegenüber und vorzugsweise an diesem an, wodurch die von der zentralen Steuer-, Mess- und Überwachungseinheit durch den Glasfaser-Leiter 8 ausgesandten Lichtimpulse ungedämpft zurück laufen.

Wenn die Schranktür geöffnet ist und der daran befestigte Magnet 4 nicht auf die Dämpfungseinrichtung 1 einwirken kann, wird das bewegliche Steckerteil 7 durch die Kraft der komprimierten Schraubenfeder 23 nach rechts in Anlage an den Abschlussdeckel 19 gedrückt. Hierdurch entsteht zwischen den Stirnflächen 10 und 11, d.h. an dem optischen Übergang ein Spalt 25 in der Größenordnung von 1 mm (oder mehr). Infolge der Neigung der verspiegelten Stirnfläche 11 in der Größenordnung von 8° bis 9° (auf die die Erfindung nicht beschränkt ist) tritt eine messbare Dämpfung der rücklaufenden Lichtimpulse auf, so dass die zentrale Steuer-, Mess- und Überwachungseinheit feststellen kann, dass die Tür (Deckel) des Glasfaser-Netzverteilers geöffnet ist.

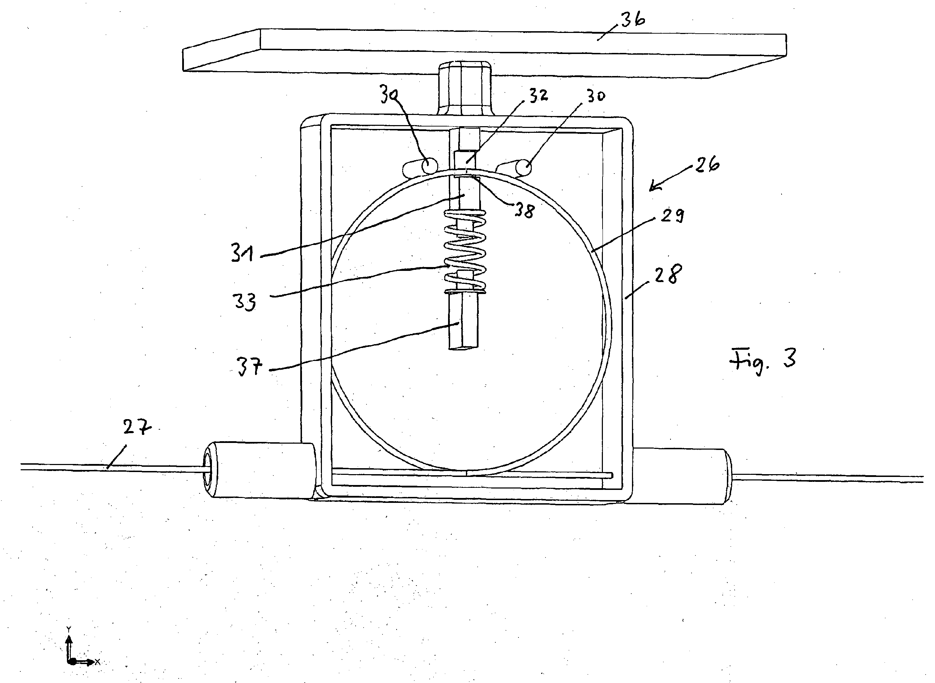

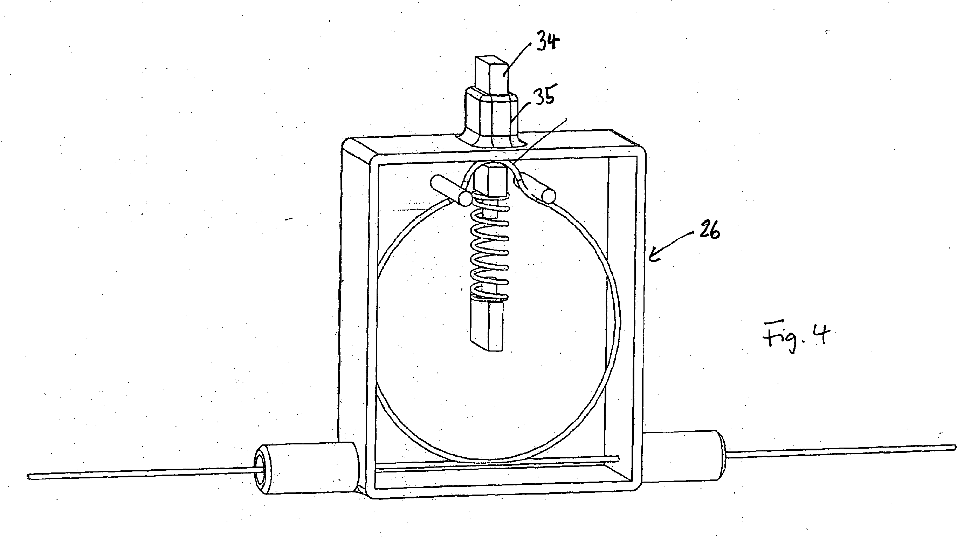

Die in den Figuren 3 und 4 dargestellte Dämpfungseinrichtung macht von einem anderen Prinzip Gebrauch. Ein wiederum nur zur Überwachung benutzter Glasfaser-Leiter 27 ist in ein rechteckiges Gehäuse 28 eingeführt und bildet darin eine etwa kreisförmige Schlaufe 29, wonach der Glasfaser-Leiter 27 an der gegenüberliegenden Seite das Gehäuse 28 verlassen kann und beispielsweise zu einer optischen Schnittstelle (nicht dargestellt) weiterlaufen kann, die für einen weiter oben erwähnten optischen Schlüssel vorgesehen sein kann. Die Schlaufenform wird durch drei Innenwände des Gehäuses 28 und zwei stiftartige Anschläge 30 in dem Gehäuse 28 aufrechterhalten.

Während bei der oben beschriebenen Ausführungsform die beiden Magnete den Schließ/Öffnungszustand der Tür/Deckel erfassen und bei geöffneter Tür die Dämpfungseinrichtung in einen Zustand versetzen, in dem die durch den Glasfaser-Leiter rücklaufenden Lichtimpulse gedämpft werden, ist bei der zweiten Ausführungsform als Betätigungseinrichtung ein linear bewegbares stabartiges Element 31 angeordnet, das eine Aussparung 32 hat, in die der Glasfaser-Leiter 27 lose eingreift. Das stabartige Element 31 ist von einer Kompressionsfeder 33 so vorgespannt, dass das Kopfende 34 des stabartigen Elementes 31 aus einem Ansatz 35 des Gehäuses 28 austritt, wenn dies nicht durch ein Hindernis verhindert wird. Dieses Hindernis ist die durch eine Linie 36 angedeutete geschlossene Tür des Glasfaser-Netzverteilers. Der Vorsprung 35 liegt an der geschlossenen Tür 36 an, wodurch das stabartige Element 31 gegen die Kraft der Schraubenfeder 33, die sich an einem Federsitz 37 abstützt, in das Gehäuse zurück gedrückt wird. In diesem Zustand liegt der Glasfaser-Leiter 27 lose in der Aussparung 32, ohne dass eine Kraft auf den Glasfaser-Leiter einwirkt.

Wenn die Tür 36 geöffnet wird, wird das stabartige Element 31 infolge einer geeignet bemessenen Federkraft in den Figuren nach oben gedrückt, wobei die untere Begrenzungswand 38 der Aussparung 32 den Glasfaser-Leiter 27 ergreift und zwischen den Anschlägen 30 in einen stärker gekrümmten Zustand versetzt. Dabei tritt das Kopfende 34 des stabartigen Elements 31 aus dem Ansatz 35 aus, wie Figur 4 zeigt.

Durch den kleineren Biegeradius des Glasfaser-Leiters 27 tritt eine messbare Dämpfung bei den rücklaufenden Lichtimpulsen auf, so dass die zentrale Steuer-, Mess- und Überwachungseinrichtung den geöffneten Zustand der Tür (Deckel) erfassen und ein Warnsignal abgeben kann.

Jede Dämpfungseinrichtung eines Glasfaser-Netzverteilers kann mit einem eigenen Glasfaser-Leiter mit der zentralen Steuer-, Mess- und Überwachungseinheit verbunden sein. Es kann aber auch vorgesehen sein, dass mehrere hintereinander liegende (kaskadierte) Glasfaser-Netzverteiler über einen gemeinsamen Glasfaser-Leiter mit der zentralen Steuer-, Mess- und Überwachungseinheit verbunden sind.

Es wird betont, dass die Erfindung nicht auf die beschriebenen und dargestellten Ausführungsformen beschränkt ist. Vielmehr sind alle offenbarten Merkmale der Ausführungsformen auch einzeln untereinander anders als oben beschrieben miteinander kombinierbar.

## Patentansprüche

1. Überwachungssystem für den Schließzustand der Tür oder des Deckels eines Glasfaser-Netzverteilers, mit einer von dem Glasfaser-Netzverteiler räumlich getrennten zentralen Steuer-, Mess- und Überwachungseinheit, die Mittel zum Aussenden und Empfangen von rücklaufenden Lichtimpulsen und deren Auswertung aufweist,
einer in dem Glasfaser-Netzverteiler angeordneten Dämpfungseinrichtung (1,26) für zu der zentralen Steuer-, Mess- und Überwachungseinrichtung rücklaufende Lichtimpulse,
und einem nicht für die Telekommunikation genutzten Glasfaser-Leiter (8,27), der mit der Steuer-, Mess- und Überwachungseinheit und der Dämpfungseinrichtung (1,26) verbunden ist,
wobei die Dämpfungseinrichtung (1,26) ein Gehäuse (2) mit einer Betätigungseinrichtung (4,24,31) aufweist, die den Schließzustand der Tür oder des Deckels erfasst und bei geöffneter Tür/Deckel die Dämpfungseinrichtung (1,26) in einen Zustand versetzt, in dem die durch den Glasfaser-Leiter (8,27) rücklaufenden Lichtimpulse gedämpft werden, **dadurch gekennzeichnet**,
dass in dem Gehäuse (2) ein feststehendes Steckerteil (6) und ein axial bewegliches Steckerteil (7) angeordnet sind, wobei der Glasfaser-Leiter (8) in dem feststehenden Steckerteil (6) derart befestigt ist, dass seine vordere Stirnfläche zu dem beweglichen Steckerteil (7) hin frei liegt und das bewegliche Steckerteil (7) eine verspiegelte Stirnfläche (11) hat, mit der das bewegliche Steckerteil (7) zwischen einer an dem feststeckenden Steckerteil (6) anliegenden Position und einer davon beabstandeten Position bewegbar ist, und
**dass** das bewegliche Steckerteil (7) durch die Kraft zweier gegenpoliger Magnete (4,24) entgegen Federkraft an das feststehende Steckerteil (6) andrückbar ist.

2. Überwachungssystem nach Anspruch 1,
**dadurch gekennzeichnet**,
**dass** einer der Magnete (4) an der Tür (5) bzw. dem Deckel des Glasfaser-Netzverteilers angebracht ist und dass der andere Magnet (24) an dem beweglichen Steckerteil (7) befestigt ist.

3. Überwachungssystem nach Anspruch 2,
**dadurch gekennzeichnet**,
**dass** das Gehäuse (2) an einer solchen Stelle in dem Glasfaser-Netzverteiler befestigt ist, dass sich die beiden Magnete (4,24) bei geschlossener Tür (5) bzw. Deckel so nahe beieinander befinden, dass das bewegliche Steckerteil (7) an das feststehende Steckerteil (6) angedrückt wird.

4. Überwachungssystem nach einem der Ansprüche 1 bis 3,
**dadurch gekennzeichnet**,
dass der Endabschnitt des Glasfaser-Leiters (8) in einem stiftartigen Vorsprung (9) des feststehenden Steckerteils (6) befestigt, vorzugsweise eingeklebt ist,
**dass** auch das bewegliche Steckerteil (7) mit einem stiftartigen Vorsprung (12) versehen ist und
**dass** die beiden stiftartigen Vorsprünge (9,12) miteinander fluchten.

5. Überwachungssystem nach einem der Ansprüche 1 bis 4,
**dadurch gekennzeichnet**,
dass die Stirnflächen (10,11) der beiden stiftartigen Vorsprünge (9,12) in einem übereinstimmenden Winkel von 8° bis 9° abgeschrägt sind.

6. Überwachungssystem nach einem der Ansprüche 1 bis 5,
**dadurch gekennzeichnet**,
dass ferner ein optischer Schlüssel mit dem Glasfaser-Leiter verbindbar ist, um zugehörige Lichtimpulse an die Steuer-, Mess- und Überwachungseinheit zu senden, die damit die Berechtigung zum Öffnen der Tür oder des Deckels überprüft.

7. Überwachungssystem nach Anspruch 6,
**dadurch gekennzeichnet**,
dass für den optischen Schlüssel eine optische Schnittstelle angeordnet ist, die über den Glasfaser-Leiter oder einen weiteren Glasfaser-Leiter mit der Steuer-, Mess- und Überwachungseinheit verbindbar ist.

## Claims

1. A monitoring system for the closure state of the door or the cover of a glass fibre network distributor including a central control, measuring and monitoring unit, which is spatially separated from the glass fibre network distributor and includes means for transmitting and receiving returning light pulses and analysing them, an attenuating device (1, 26) arranged in the glass fibre network distributor for light pulses returning to the central control, measuring and monitoring device and a glass fibre guide (8, 27), which is not used for telecommunication and is connected to the control, measuring and monitoring unit and to the attenuating device (1, 26), wherein the attenuating device (1, 26) includes a housing (2) with an actuating device (4, 24, 31), which detects the closure state of the door or the cover and, when the door/cover is open shifts the attenuating device (1, 26) into a state in which the light pulses returning through the glass fibre guide (8, 27) are attenuated, **characterised in that** arranged in the housing (2) are a fixed plug member (6) and an axially movable plug member (7), wherein the glass fibre guide (8) is fastened in the fixed plug member (6) such that its front end surface is exposed to the movable plug member (7) and the movable plug member (7) has an end surface (11) with a reflective coating, with which the movable plug member (7) is movable between a position engaging the fixed plug member (6) and a position spaced from it and that the movable plug member (7) is pressable against the fixed plug member (6) by the force of two oppositely poled magnets (4, 24) against a spring force.

2. A monitoring system as claimed in Claim 1, **characterised in that** one of the magnets (4) is mounted on the door (5) or the cover of the glass fibre network distributor and that the other magnet (24) is fastened to the movable plug member (7).

3. A monitoring system as claimed in Claim 2, **characterised in that** the housing (2) is secured within the glass fibre network distributor at a position such that the two magnets (4, 24) are situated so close to one another, when the door (5) or cover is closed, that the movable plug member (7) is pressed against the fixed plug member (6).

4. A monitoring system as claimed in one of Claims 1 to 3, **characterised in that** the end section of the glass fibre guide (8) is fastened, preferably by adhesive, in a peg-like projection (9) on the fixed plug member (6), that the movable plug member (7) is also provided with a peg-like projection (12) and that the two peg-like projections (9, 12) are aligned with one another.

5. A monitoring system as claimed in one of Claims 1 to 4, **characterised in that** the end surfaces (10, 11) of the two peg-like projections (9, 12) are bevelled at matching angles of 8° to 9°.

6. A monitoring system as claimed in one of Claims 1 to 5, **characterised in that** an optical key is further connectable to the glass fibre guide in order to transmit appropriate light pulses to the control, measuring and monitoring unit, which thus checks the authorisation for opening the door or the cover.

7. A monitoring system as claimed in Claim 6, **characterised in that** an optical interface for the optical key is provided, which is connectable to the control, measuring and monitoring unit via the glass fibre guide or a further glass fibre guide.

## Revendications

1. Système de surveillance de l'état de fermeture de la porte ou du couvercle d'un distributeur réseau en fibre de verre, comprenant une unité centrale de commande, de mesure et de surveillance, isolée spatialement du distributeur réseau en fibre de verre, laquelle présente des moyens servant à émettre et recevoir des impulsions de lumière retournées et l'analyse de celles-ci,
un dispositif d'atténuation (1, 26), disposé dans le distributeur réseau en fibre de verre, pour des impulsions de lumière retournées en direction du dispositif central de commande, de mesure et de surveillance,
et un conducteur en fibre de verre (8, 27), qui n'est pas utilisé pour la télécommunication et qui est relié à l'unité de commande, de mesure et de surveillance et au dispositif d'atténuation (1, 26),
sachant que le dispositif d'atténuation (1, 26) présente un boîtier (2) pourvu d'un dispositif d'actionnement (4, 24, 31) qui détecte l'état de fermeture de la porte ou du couvercle et place, lorsque la porte/le couvercle est ouvert(e), le dispositif d'atténuation (1, 26) dans un état dans lequel les impulsions de lumière retournées par le conducteur en fibre de verre (8, 27) sont atténuées,
**caractérisé en ce que**
un élément de connecteur immobile (6) et un élément de connecteur mobile axialement (7) sont disposés dans le boîtier (2), sachant que le conducteur en fibre de verre (8) est fixé dans l'élément de connecteur immobile (6) de telle manière que sa face frontale avant est dégagée en direction de l'élément de connecteur mobile (7) et que l'élément de connecteur mobile (7) comprend une face frontale (11) réfléchissante, avec laquelle l'élément de connecteur mobile (7) peut être déplacé entre une position située au niveau de l'élément de connecteur immobile (6) et une position espacée de cette dernière, et
**en ce que** l'élément de connecteur mobile (7) peut être pressé, par la force de deux aimants (4, 24) à polarités opposées, contre la force de ressort, au niveau de l'élément de connecteur immobile (6).

2. Système de surveillance selon la revendication 1,
**caractérisé en ce que**
l'un des aimants (4) est installé sur la porte (5) ou sur le couvercle du distributeur réseau en fibre de verre, et **en ce que** l'autre aimant (24) est fixé sur l'élément de connecteur mobile (7).

3. Système de surveillance selon la revendication 2,
**caractérisé en ce que**
le boîtier (2) est fixé à un niveau d'emplacement tel dans le distributeur réseau en fibre de verre que les deux aimants (4, 24) se trouvent, lorsque la porte (5) ou le couvercle est fermé (e), à distance si étroite l'un de l'autre que l'élément de connecteur mobile (7) est pressé contre l'élément de connecteur immobile (6).

4. Système de surveillance selon l'une quelconque des revendications 1 à 3,
**caractérisé en ce que**
la section d'extrémité du conducteur en fibre de verre (8) est fixée, de préférence est collée, dans une partie faisant saillie (9), de type tige, de l'élément de connecteur immobile (6), et
**en ce que** l'élément de connecteur mobile (7) est également pourvu d'une partie faisant saillie (12), de type tige, et
**en ce que** les deux parties faisant saillie (9, 12), de type tige, sont alignées l'une sur l'autre.

5. Système de surveillance selon l'une quelconque des revendications 1 à 4,
**caractérisé en ce que**
les faces frontales (10, 11) des deux parties faisant saillie (9, 12), de type tige, sont biseautées selon un angle de 8° à 9° correspondant.

6. Système de surveillance selon l'une quelconque des revendications 1 à 5,
**caractérisé en ce que**
une clé optique peut en outre être reliée au conducteur en fibre de verre afin d'envoyer des impulsions de lumière associées à l'unité de commande, de mesure et de surveillance, laquelle surveille ainsi l'autorisation d'ouverture de la porte ou du couvercle.

7. Système de surveillance selon la revendication 6,
**caractérisé en ce que**
pour la clé optique, une interface optique est disposée, qui peut être reliée par l'intermédiaire du conducteur en fibre de verre ou d'un autre conducteur en fibre de verre à l'unité de commande, de mesure et de surveillance.
